# EUROPEAN PATENT APPLICATION

(11) **EP 2 075 120 A1**
(43) Date of publication of application: **01.07.2009**
(21) Application number: 08171929.6
(22) Date of filing: 17.12.2008
(51) Int. Cl.: B32B 9/06, D21H 21/14

(54) **Scented paper laminated and method for manufacturing same**

(30) Priority: 17.12.2007 US 957813
(71) Applicant: 9164-3353 Quebec Inc., Boisbriand QC J7G 2A7 (CA); Cascades Canada Inc., Montreal QC H3A 1G1 (CA)
(72) Inventor: Lefebvre, Stéphane, Saint-Calixte Québec J0K1Z0 (CA); Masse, Daniel, Saint-Jérôme Québec J7Y4K6 (CA); Perrier, Frédéric, Saint-Hippolyte Québec J8A2G3 (CA); Perrier, Germain, Sainte-Thérèse Québec J7E5T4 (CA); Girardin, Yvan, Montréal Québec H3C4L1 (CA); Boivin, Robert, Sainte-Adèle Québec J8B1R8 (CA); Charbonneau, Marc, Saint-Jérôme Québec J5L1N2 (CA)
(74) Representative: Wagret, Frédéric

(57) **Abstract**

A scented paper laminate having a desired scent comprises a first paper substrate; a second paper substrate; and a scented water-based adhesive composition providing bonding between the first and the second paper substrates together, the scented paper laminate having a moisture level below 10 wt%. A method for manufacturing a scented paper laminate having a moisture level below 10 wt%, the method comprises the steps of: applying a scented water-based adhesive composition to a first face of a first paper substrate; laminating a second paper substrate to the first face of the first paper substrate; and controlling the moisture level of the scented paper laminate.

## Description

### Field of the Invention

The invention relates to scented paper laminates and, more particularly, laminates having two paper substrates and a scented adhesive extending therebetween. It also relates to a method for manufacturing the scented paper laminate.

### Description of the Prior Art

To increase consumer appeal, various scented products have been created by applying a scent emitting composition, such as a perfume or scented oil, to a substrate. However, the scent emitted by such products generally dissipates rapidly.

Moreover, for advertising purposes, printing on the scented product is often desired. However, the printer ink receptivity of the resulting scented product is often not sufficient.

### BRIEF SUMMARY OF THE INVENTION

It is therefore an aim of the present invention to address the above mentioned issues.

According to a general aspect, there is provided a scented paper laminate having a desired scent comprising: a first paper substrate; a second paper substrate; and a scented water-based adhesive composition providing bonding between the first and the second paper substrates together, the scented paper laminate having a moisture level below 10 wt%.

According to another general aspect, there is provided a method for manufacturing a scented paper laminate having a moisture level below 10 wt%, the method comprising the steps of: applying a scented water-based adhesive composition to a first face of a first paper substrate; laminating a second paper substrate to the first face of the first paper substrate; and controlling the moisture level of the scented paper laminate.

According to a further general aspect, there is provided a printable scented paper laminate comprising: two paper scent-free substrates having respectively a grammage ranging between 50 and 850 grams per square meter; and a scented water-based adhesive including a vinyl ester resin providing bonding between both paper substrates together; the scented paper laminate having a moisture level below 10 wt%.

According to a still another general aspect, there is provided a process for manufacturing a printable scented paper laminate, the process comprising: applying a water-based scented adhesive at room temperature to a scented-free paper substrate having a grammage ranging between 50 and 850 grams per square meter, the scented water-based adhesive having including a vinyl ester resin; laminating a second scent-free paper substrate to the paper substrate and adhesive assembly for bonding both paper substrates together; and heating the paper substrate and adhesive assembly to reduce the moisture content below 10 wt%, the printable scented paper laminate having good performance on printing equipment.

In this specification, the term "paper laminate" is intended to mean a product that includes two or more layers of paper materials adhered together. The term "scented composition" as used herein refers to a composition that emits a desired scent. The term "scented adhesive composition" as used herein refers to a composition that emits a desired scent and has adhesive properties. The term "desired scent" as used herein shall refer to a fragrant scent that has been intentionally provided in order to add commercial value to a product. Desired scents include those fragrances that can be obtained from "fragrance houses" that supply fragrances having desired scents. In general, one can purchase or formulate a fragrance to provide a desired scent. Paper products, polymers, or adhesives may have scents or odors due to the presence of solvents or other volatile components. In general, "desired scents" are generally not those scents or odors of a product that are present merely as a result of the components therein such as solvents or adhesives and that have not been intentionally provided for their olfactory properties.

### BRIEF DESCRIPTION OF THE DRAWINGS

Fig. 1 is a sectional view of a scented paper laminate in accordance with a first embodiment;

Fig. 2 is a sectional view of a scented paper laminate in accordance with a second embodiment, including an external supplementary layer;

Fig. 3 is a schematic flowchart of a method for manufacturing the scented paper laminate shown in Fig. 1;

Fig. 4 is a schematic view of an exemplary continuous process for manufacturing the scented paper laminate shown in Fig. 1;

Fig. 5 is a schematic flowchart of an alternate method for manufacturing the scented paper laminate shown in Fig. 1, wherein the scented paper laminate is manufactured automatically as sheets; and

Fig. 6 includes Figs. 6a, 6b, and 6c and is a schematic view of an exemplary batch process for manufacturing the scented paper laminate shown in Fig. 1.

It will be noted that throughout the appended drawings, like features are identified by like reference numerals.

### DETAILED DESCRIPTION

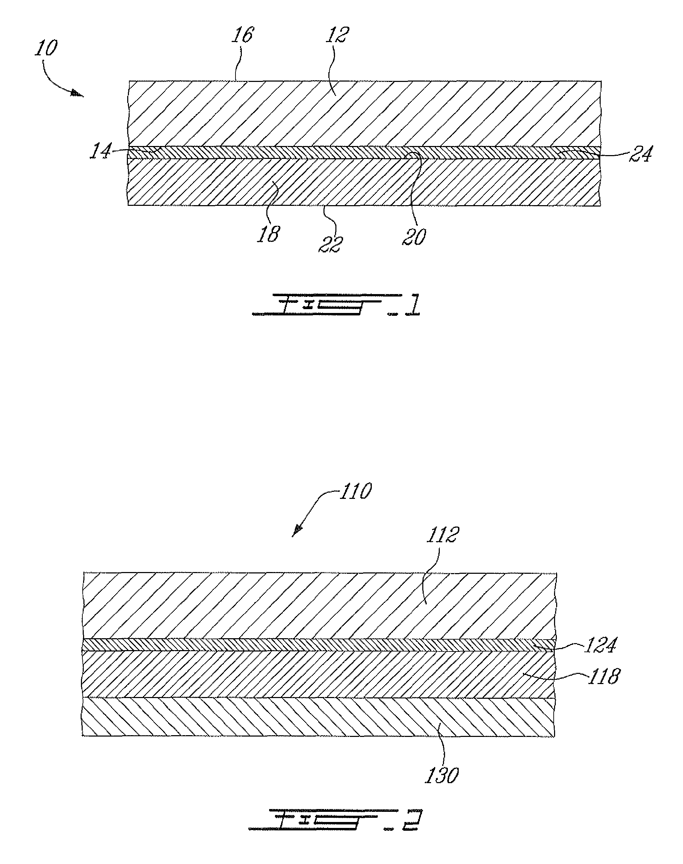

Referring to the drawings and, more particularly, referring to Fig. 1, it will be seen a scented paper laminate 10 in accordance with an embodiment.

The scented paper laminate 10 includes a first paper substrate 12 having a first face 14 and a second face 16; a second paper substrate 18 also having a first face 20 and a second face 22; and a scented water-based adhesive composition 24 bonding the first paper substrate 12 and the second paper substrate 18 together. The scented water-based adhesive composition 24 extends between the first faces 14, 20 of the first and second paper substrates 12, 18, i.e. the first faces 14, 20 of the first and second paper substrates are the internal faces 12, 18 of the laminate 10.

The first paper substrate 12 and the second paper substrates 18 are mats of fibers, either continuous as webs or discontinuous as sheets.

Mats of fibers are generally made with fibers from wood pulp. The wood pulp may be provided as cellulose fiber from chemical pulped wood, and may include a blend from coniferous and deciduous trees. By way of example, the fibers can be from Northern hardwood, Northern softwood, Southern hardwood, or Southern softwood. Blends of hardwood and softwood fibers are frequently used. The fibers can also be bleached or unbleached. The fibers may also include synthetic fibers and recycled fibers.

Enough of a total fiber weight should be used so that substrates 12, 18 are strong enough to be processed by paper converting and printing equipment. As an example, each mat of fibers of the substrates can be in the range of about 50 to about 850 grams per square meter of paper. As a further example, the mat of fibers of the substrates may be in the range of 120 to 140 grams per square meter of paper.

It is appreciated that the paper substrates 12, 18 can include additives or backing layers. For example, at least one of the paper substrates 12, 18 can be backing metallic foil, i.e. a paper layer having a metallic foil laminated on one face. In an alternate embodiment, at least one of the paper substrates 12, 18 can be a magnetic paper, such as Magnecote^{™}, for instance.

The permeability of the mats of fibers may be measured in accordance with TAPPI test T460 with a Gurley densitometer. In an embodiment, the permeability of the mats of fibers can be about 8 to about 1,000,000 sec/100 cc.

Scott Bond test TAPPI T 569 measures the fiber resistance to delaminating of fibers from the fiber mat. As an example, the mat of fibers can have a fiber delaminating resistance ranging between 90 and 500 feet pounds per square inches.

Burst strength of a paper substrate can be measured in accordance with TAPPI test method T403. The paper substrates used in the laminate should have sufficient burst so that the finished laminate product can perform as desired on printing equipment. As an example, the paper substrates have a burst strength ranging between 30 PSI and 300 PSI as measured in the cross-direction and in the machine-direction.

The first paper substrate 12 and the second paper substrate 18 can be similar or different, i.e. the second paper substrate, 18 can be made with paper that is the same as the first paper substrate 12 in terms of grammage, sizing, Scott bond, and burst strength, etc. This can provide an advantage in terms of handling and inventory management. However, the second paper substrate 18 can also be different than the first paper substrate.

The scented paper laminate 10 includes a scented water-based adhesive composition 24 provided between the first paper substrate 12 and the second paper substrate 18 to bond the substrates 12, 18 together. The scented, water-based adhesive composition 24 has various qualities. For example, the scented water-based adhesive composition 24 can have properties including sufficient adhesion to adhere the first paper substrate 12 to the second paper substrate 18 and elasticity sufficient to stay pliable and/or flexible after being formed into a scented paper laminate 10.

The scented water-based adhesive composition 24 should have several properties such as fragrance longevity, fragrance authenticity, adhesion during the lamination process, viscosity of the scented water-based adhesive composition, dried scented adhesive composition flexibility, and the like.

It is appreciated that the scented adhesive composition is adjusted in accordance with the substrate properties such as grammage, surface finish, recycled fiber content, etc.

Applying the scented composition in amounts greater than necessary can lead to difficulties with the resulting laminate. The scented composition is applied in amounts large enough so that the scented product has the desired scented properties. As an example, the scented composition can be applied as a coat of about 4 grams per square meter to about 80 grams per square meter of scented product when measures are taken while the composition is still wet. As a further example, the scented composition can be applied in an amount of about 18 to about 30 grams per square meter of scented product when measures are taken while the composition is still wet.

The scented water-based adhesive 24 includes a resin that acts as a scent carrier as well as an adhesive. In an embodiment, the resin is selected from the vinyl ester family such as a polyvinyl acetate copolymer. The resin provides the adhesive properties to the composition 24. For example, Tribond P-1031 manufactured by Tri-Tex can be used.

The scent carrier can also include an acrylic emulsion polymer. In an embodiment, the acrylic emulsion polymer has a glass transition temperature (Tg) which is between -50°C and 10°C. The acrylic emulsion polymer provides flexibility to the dried adhesive film and slows down fragrance diffusion. For example, Lucidene ^{™} 604 manufactured by Rohm and Hass can be used.

The scent carrier can be provided in an amount sufficient to contain or carry a desired amount of a fragrant component. As an exemplary range, the scent carrier can be from about 30.0 wt% to about 90.0 wt% in the scented composition.

More particularly, by way of example, the proportion of polyvinyl acetate copolymer can range from about 30.0 wt% to about 85.0 wt% in the scented composition 24. The polyvinyl acetate copolymer can be from about 50.0 wt% to about 80.0 wt% of the scented composition 24. By way of example, the proportion of acrylic emulsion polymer can range from about 0 wt% to about 55.0 wt% in the scented composition 24. The acrylic emulsion polymer can be from about 15.0 wt% to about 55.0 wt% of the scented composition 24.

The scented composition can include a fragrant component, such as a fragrance. The fragrant component can be any component that can be used in the scented composition to emit a desired scent when applied to a paper substrate to form the scented laminate. The selection of the fragrant component can vary widely and can be subject to personal preferences. That is, certain people may prefer certain fragrances over other fragrances. Nevertheless, various fragrances are available from "fragrance houses" that commercially supply fragrances for various applications. One can select a fragrance that would be desired for a particular paper laminate. The fragrant component can be selected so that it is compatible with the other components of the scented composition. By compatible, it is meant that the fragrant component does not adversely react or interact with other components in the composition to create an unpleasing scent or destroy the fragrance. In addition, the fragrant component can be selected so that it remains a part of the scented adhesive composition and releases scent over a desired length of time.

Typically the fragrance is an essential oil of the desired scent. The fragrance can be modified before being added to the water based adhesive composition to obtain a uniform and homogeneous mixture. For example, glycols, such as ethylene glycol for instance, can be added to the fragrances to increase the solubility of the essential oils.

The scented composition has a sufficient amount of the fragrant component to have desired scent qualities. Using too much of the fragrant component may not be economically efficient. As an example, the scented composition includes from about 5 wt% to about 20.0 wt% of the fragrant component. As another example, the scented composition can include from about 10.0 wt% to about 14.0 wt% of the fragrant component.

Scented water-based adhesive composition 24 can have a wide variety of scents. Exemplary scents include apple, popcorn, leather, chocolate, suntan, and the like.

The scented water-based adhesive composition can include an agent which slow down fragrance diffusion. As mentioned above, the acrylic emulsion, as scent carrier, slows down fragrance diffusion. However, if the substrates 12, 18 and, more particularly, the paper substrates do not provide adequate mechanical properties during the lamination process, only the polyvinyl acetate copolymer can be used as adhesive and scent carrier. This can occur if the paper substrates 12, 18 contain a relatively important content of recycled fibers. Therefore, acrylic emulsion can be replaced by a plasticizer such as butyl benzyl phthalate to provide flexibility to the dried adhesive film, i.e it stays pliable and/or flexible after being formed into a scented paper laminate. For example, Santicizer®, manufactured by Brenntag, can be used. If the amount of acrylic emulsion in the scented adhesive composition is reduced or if the acrylic emulsion is removed from the scented adhesive composition, plasticizers can be added to compensate.

As an example, the scented composition 24 contains from about 0 wt% to about 1.0 wt% of the plasticizer.

To slow down fragrance diffusion, the content of the composition 24 in acrylic emulsion is typically maximized. However, as mentioned above, if the paper substrates 12, 18 do not provide adequate mechanical properties during the lamination process, acrylic emulsion cannot be used. It can be replaced by a glycol having a low evaporation rate such as diethylene glycol. In an embodiment, the glycol has an evaporation rate (nBuOAc = 1) lower than 0.001. In an embodiment, the boiling temperature of the glycol is higher than the lamination temperature to ensure that it remains in the scented water-based adhesive composition 24. For example, for diethylene glycol, the boiling point ranges between 471 and 482°F. For instance, diethylene glycol manufactured by Canada Colors & Chemicals Ltd can be used.

As an example, the scented water-based adhesive composition 24 contains from about 0.5 wt% to about 4.0 wt% of glycol. As another example, the scented composition 24 can contain from about 2.0 wt% to about 4.0 wt% of glycol.

In an embodiment, the viscosity of the scented adhesive composition 24 is controlled to prevent an extensive penetration of the scented adhesive composition 24 in paper pores. By reducing the scented adhesive composition penetration in paper pores, less adhesive has to be used to laminate both paper substrates together. To prevent excessive adhesive penetration in the substrates 12, 18, the composition viscosity should range between 500 and 2000 centipoises, measured with a Brookfield apparatus at 20 rpm and using a #3 spindle at room temperature (25 degrees Celcius).

If the viscosity is below 500 centipoises, excessive penetration in the paper pores can occur and, if the viscosity is higher than 2000 centipoises, foam problems, which are difficult to control, can occur since air bubbles can difficultly flow outwardly of the adhesive composition 24. Moreover, if the adhesive viscosity is above 2000 centipoises, non-uniform adhesive application on the paper substrate can occur.

The scented adhesive composition 24 applied between both paper substrates is minimized to obtain a scented paper laminate 10 with a moisture level below a predetermined threshold. If the moisture level of the scented paper laminate 10, after the lamination process, is higher than the predetermined threshold, the scented paper laminate 10 is heated to reduce the moisture level of the resulting scented paper laminate 10, as it will be described in more details below.

If the viscosity of the resulting scented water-based adhesive composition 24 is too high, water can be added to reduce the viscosity. Consequently, this water addition lowers the solid content of the composition 24 and increases the moisture level of the resulting laminate 10. To counteract this effect, calcium carbonate and/or clay, such as hydrated aluminum silicate, can be added. In an embodiment, the particle size of these additives ranges between 0.6 and 3 µm. In an embodiment, 90 wt% of the particles are smaller than 2 µm and 65 wt% of the particles are smaller than 1 µm. For example, Omyacarb® UF manufactured by Omya inc. can be used as calcium carbonate and Huber 90 manufactured by Huber can be used as hydrated aluminum silicate.

As an example, the scented composition 24 contains from about 0 wt% to about 10.0 wt% of calcium carbonate. As another example, the scented composition 24 can contain from about 5 wt% to about 10.0 wt% of calcium carbonate.

By way of example, the scented composition 24 contains from about 0 wt% to about 8.0 wt% of clay. As another example, the scented composition 24 can contain from about 2.0 wt% to about 8.0 wt% of clay.

On the opposite, if the viscosity of the scented adhesive composition 24 is too low and excessive adhesive penetration in the paper substrates 12, 18, an additive can be added to the composition to increase the viscosity. Nonionic hydrophobically modified ethylene oxide urethane rheology modifier can be used. For example, acrysol^{™} products, such as acrysol^{™} RM-825 manufactured by Rohm & Haas, can be used.

As an example, the scented composition 24 contains from about 0 wt% to about 3.0 wt% of rheology modifier. As another example, the scented composition 24 can contain from about 0.2 wt% to about 3.0 wt% of rheology modifier.

To control foam formation in the laminator reservoir, defoamer can be added to the scented water-based adhesive composition 24. Synthetic or mineral defoamer agents such Suppressor 2336 manufactured by Hydrite Chemical Co and/or Fluxair B-870 manufactured by Nymco S.p.A. can be used.

As an example, the scented composition 24 contains from about 0.1 wt% to about 1.0 wt% of defoamer. As another example, the scented composition 24 can contain from about 0.1 wt% to about 0.5 wt% of defoamer.

To ensure the adhesive stability, the scented adhesive composition 24 should have a pH proximate to 7, i.e. neutral. In an embodiment, the pH should be either neutral or slightly alkaline (basic) pH. In an embodiment, the pH should range between 5 and 8. The pH can be acidic if it is applied to the acidic paper side of an acidic paper. In an alternate embodiment, the scented adhesive composition pH should range between 7 and 8.

Referring to Table 1, reproduced below, three examples of scented adhesive composition 24 are described. The proportion of each component of the scented adhesive composition 24 are given in wt%.

The scented adhesive compositions of examples A and C solely include polymer acetate copolymer as scent carrier while the scented adhesive composition of example B also includes an acrylic emulsion polymer as scent carrier.

Scent diffusion of the scented adhesive composition of example B is slower than scent diffusion of example A and C scented adhesive compositions since it also includes an acrylic emulsion polymer as scent carrier.

The scented adhesive composition of example C has a higher viscosity than the example A and B scented adhesive compositions. Consequently, water was added to the scented adhesive composition of example C to reduce the viscosity and calcium carbonate was added to increase the solid content. On the opposite, acrysol was added to the scented adhesive compositions of examples A and B to increase the viscosity to prevent excessive adhesive composition penetration in the paper substrate pores.

All scented adhesive compositions include a defoamer agent.

**Table 1**

| | Example A | Example B | Example C |
|---|---|---|---|
| Polyvinyl acetate copolymer | 81.2 | 51.2 | 66.2 |
| Acrylic emulsion polymer | 0 | 25 | 0 |
| Acrysol | 1.0 | 1.0 | 0 |
| Plasticizer | 0.5 | 0 | 0.5 |
| Diethylene glycol | 2.0 | 4.0 | 2.0 |
| Fragrance | 15 | 18 | 15 |
| Defoamer | 0.3 | 0.3 | 0.3 |
| Water | | | 6 |
| Calcium carbonate | | | 10 |

The scented paper laminate can include other components. Fig. 2 shows a schematic cross-sectional view of a scented paper laminate 110 in accordance with another embodiment. A first paper substrate 112 is adhered to a scented adhesive composition layer that is, in turn, adhered to a second paper substrate 118. The laminate 110 also includes another material layer 130, laminated outwardly of the second paper substrate 118. The outer material layer 130 can be provided on either or both of the first paper substrate 112 and the second paper substrate 118.

The outer material layer 130 can be made of polymeric films, metallic foils, magnetic paper, such as Magnecote^{™}, or the like. Polymeric films can include polyester, polypropylene, polyethylene, cellophane, nylon, and the like.

For some types of products, it may be desirable if the scented paper laminate can adhere to a surface. Therefore, by way of example, a layer of an adhesive can be applied to the laminate.

The grammage of the resulting paper laminate ranges between 100 and 600 grams per square meters, in an embodiment, and, in an alternate embodiment, the grammage ranges between 200 and 350 grams per square meters. The thickness of the laminate paper ranges between 7 and 22 mils, measured in accordance with TAPPI method T411. The paper laminate has a fiber delaminating resistance (Scott Bond test TAPPI T569) ranging between 90 and 500 feet pounds per square inches, and a burst strength ranging between 30 PSI and 300 PSI as measured in the cross-direction and in the machine-direction. To offer adequate printing properties, the paper laminate has a Sheffield smoothness ranging between 50 and 350 SU on the felt side and the wire side, i.e. the top and the bottom surface of the paper laminate. For better contrast, the paper laminate has a typical brightness ranging between 80 and 120 % based on D65 readings.

The method of forming the scented paper laminate 10, 110 includes the steps of applying a scented adhesive composition between a first paper substrate and a second substrate, thereby bonding the first paper substrate and the second paper substrate together to form a scented paper laminate. In an embodiment, the scented adhesive composition is applied to the first paper substrate and the second paper substrate is laminated over the adhesive layer. In an alternate embodiment, the scented adhesive composition is applied to the second paper substrate and the first paper substrate is laminated over the adhesive layer.

The scented adhesive composition can be applied as a uniform layer or can be applied in accordance with an application pattern.

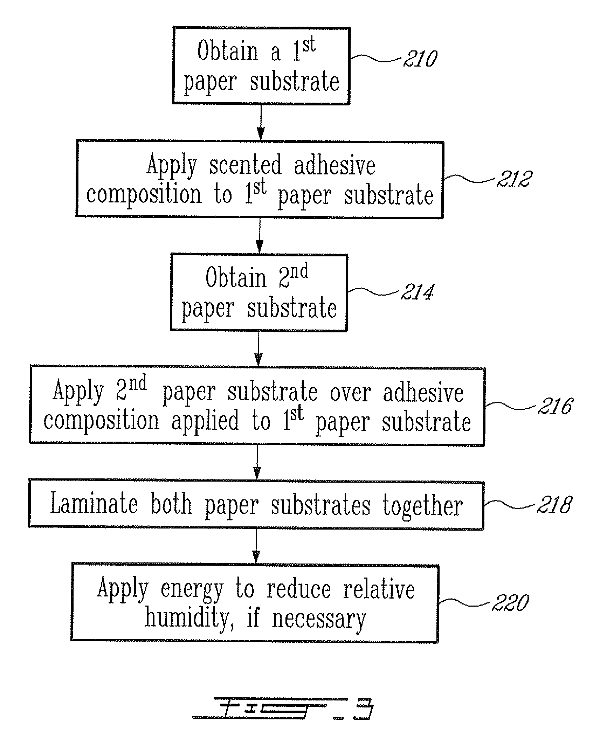

Referring to Fig. 3, there is schematically shown a method for manufacturing the scented paper laminate. A first paper substrate is first obtained 210 and a scented adhesive composition is applied to a face of the first paper substrate 212. Then, a second paper substrate 214 is obtained and the second paper substrate is applied over the face of the first paper substrate having the scented adhesive composition applied thereto. Both paper substrates are laminated together 218. If necessary, energy is applied to reduce the moisture level of the resulting scented paper laminate 220.

For printing purposes, the scented paper laminate should have a moisture level lower than 10 wt% to prevent flexing and cockling phenomena. In an embodiment, the moisture level of the scented paper laminate is controlled between 4 and 10 wt%. This ensures a good performance of the paper laminate on printing equipment.

Therefore, since the scented adhesive composition is water-based, the moisture level of the resulting scented paper laminate can be higher than 10 wt% after the lamination step, particularly if the scented water-based adhesive composition includes water. For printing purposes, the moisture level has to be reduced. Energy is thus applied to remove water from the scented paper laminate. In an embodiment, heat, as an energy source, is applied.

Removing moisture from the laminate is typically accomplished by adding heat to the laminate and circulating air. Several methods can be used to apply heat. For instance, without being limitative, dryer drums (or cans), filled with steam, infra red dryers, air dryers, evaporation tables, ovens, etc can be used.

It is appreciated that the paper laminate can be manufactured with a moisture level below the threshold. Thus, it does not require to be dried before being stored or printed thereto. For example, if the manufacturing rate is relatively low, humidity contained in the paper laminate can evaporate below the threshold by natural air convection. Also, the scented water-based adhesive composition can be designed to obtain paper laminate having a moisture level below the threshold.

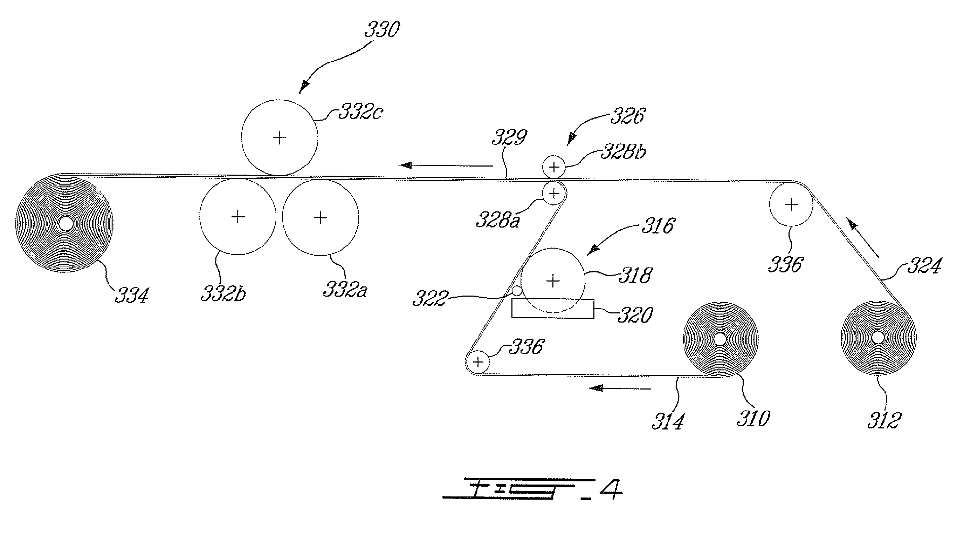

Referring to Fig. 4, a schematic view of an exemplary continuous and automated process for manufacturing the scented paper product is shown. It should be understood that Fig. 4 is an exemplary schematic view and includes many of the operations carried out in commercial paper converter facilities. The equipment used in a particular operation can vary from facility to facility.

The starting material generally includes two papers in the forms of rolls 310, 312. The first paper substrate 314 is unwound from a roll 310 before receiving an amount of scented adhesive composition from an applicator 316. In the embodiment shown, the application is an applicator roll 318, rotating in a coating pan 320, containing the scented water-based adhesive composition and being in contact with the first paper web 314. A metering roll 322 extends between the coating pan 320 and the first paper web 314. Its outer surface is in contact with the outer surface of the applicator roll 318 to regulate the quantity of scented water-based adhesive composition applied to the paper web 314. The applicator could be a rod coater, three roll coater, air knife coater, a slot die coater, a blade coater or the like.

The minimum coat weight must be kept in order to ensure good lamination. It also ensure longevity and authenticity of the desired scent. Applying the scented adhesive composition in amounts greater than necessary can lead to difficulties in manufacturing and handling the laminate product.

Simultaneously, the second paper substrate 324 is unwound from a roll 312 and then fed into a nip roller 326 having two rolls 328a, 328b applying pressure to both webs 314, 324 for lamination purposes. The nip roller 326 forms a scented paper laminate 329 by forcing together the first paper substrate 314, the scented adhesive composition layer, and the second paper substrate 324.

Then, the paper laminate goes to a drying stage. The paper dryer 330 includes three dryer rolls 332a, 332b, 332c having an outer surface in contact with the laminate. It is appreciated that other paper dryers can be used such as, without being limitative, infra red dryers, air dryers, evaporation tables, ovens, etc.

For guiding either the paper webs 314, 324 or the laminate 329 along the process line, the apparatus includes several turn rollers 336.

Finally, the scented paper laminate is then wound onto a roll 334 or subjected to further processing such as cutting, packaging, or the like.

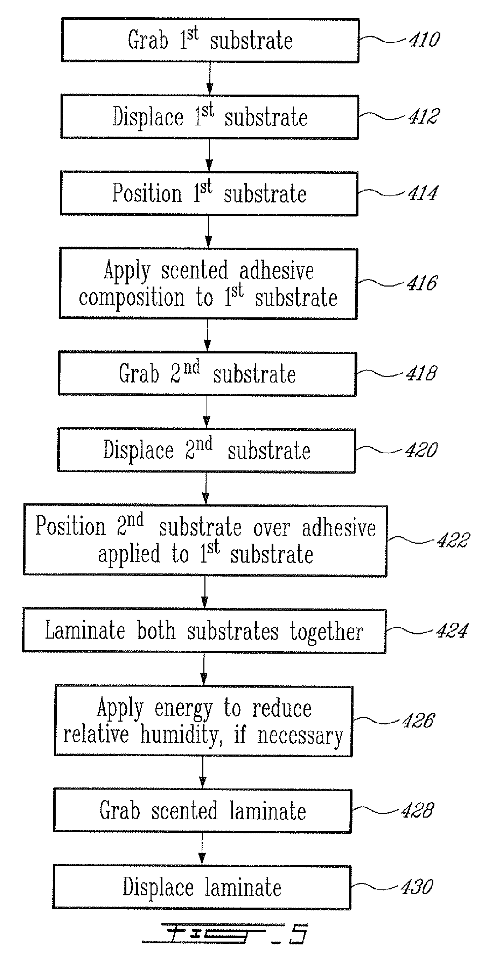

Referring to Fig. 5, there is schematically shown an alternate automated method for manufacturing the scented paper laminate in sheets.

A sheet of a first paper substrate is grabbed from a first paper substrate sheet stack 410. Then, the first paper substrate is displaced 412 and positioned to a adhesive application and lamination station 414. A layer of a scented adhesive composition is applied to a face of the first paper substrate in a predetermined quantity 416. Either consecutively or simultaneously while the previous steps are carried out, a sheet of a second paper substrate is grabbed from a second paper substrate sheet stack 418. Then, the second paper substrate is displaced 420 and positioned over the face of the first paper substrate having the scented adhesive composition applied thereto 422. Both paper substrate sheets are laminated together 424. If necessary, energy is applied to reduce the moisture level of the resulting scented paper laminate sheet 426. Then, the scented paper laminate sheet is grabbed 428 and displaced either to a printing station or to a location where the sheets are stacked onto one another for storage purposes 430.

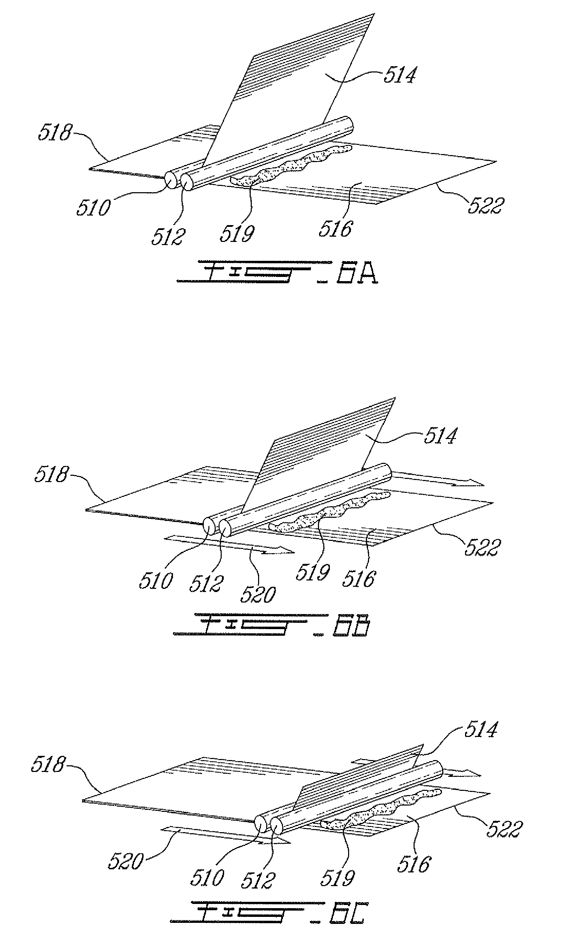

Referring to Fig. 6, a schematic view of an alternate exemplary apparatus for manufacturing the scented paper product is shown.

The apparatus includes two rods 510, 512 extending parallel to one another and having a narrow gap therebetween in which a paper substrate 514 can extend.

Another paper substrate 516 is disposed substantially flat on an adhesive application and lamination surface. Both rods 510, 512 are disposed over the paper substrate 516, adjacent to a first edge 518.

A first edge of the paper substrate 514 is juxtaposed to the first edge 518. The paper substrate 514 extends below rod 510 and upwardly between both rods 510, 512.

To dispense a controlled amount (or thickness) per surface area of the scented water-based adhesive composition 519, rod 510 is grooved. Rod 512 has a substantially smooth surface.

Both rods 510, 512 translate simultaneously along arrow 520. Rod 510 dispense a controlled amount of the scented water-based adhesive composition 519 while rod 512 laminates paper substrate 514 over paper substrate 516 and adhesive composition layer. The rods 510, 512 translate until the second edge 522, opposed to first edge 518, is reached.

Then, heat can be applied to remove water contained in the resulting paper laminate.

Examples

Tables 2 to 7 show some mechanical properties of six paper laminates having different scents. More particularly, the paper laminates have apple, popcorn, leather, suntan, chocolate, and earth scent. Different scented water-based adhesive compositions have been used to reproduced the desired scents. Consequently, the mechanical properties of the paper laminates vary accordingly.

**Table 2 - Apple fragrance**

| Properties | Units | Test Method | Fragrance Paper | Base Stock | Fragrance coating |
|---|---|---|---|---|---|
| Grammage | g/m² | TAPPI T410 | 229 | 105 | 19 |
| Thickness | mils | TAPPI T411 | 9.2 | 4.3 | 0.6 |
| Smoothness Sheffield | SU | TAPPI | | | |
| FS | | T538 | 216 | 107 | |
| WS | | | 201 | 96 | |
| Porosity Gurley | sec./ 100cc | TAPPI T460 | N/A | 295 | |
| Sizing HST | sec | TAPPI T530 | N/A | 10 | |
| Burst strength | psi | TAPPI T403 | 60 | 29 | |
| Scott Bond | ft.lb/in² | TAPPI T569 | 136 | N/A | |
| Brightness D65 | % | TAPPI T525 | 97.1 | 99.2 | |
| Colour 65 (UV excl.) | | TAPPI | | | |
| L* | | T527 | 94.2 | 94.5 | |
| a* | | | -0.7 | -0.7 | |
| b* | | | 1.6 | 0.7 | |

**Table 3 - Popcorn fragrance**

| Properties | Units | Test Method | Fragrance Paper | Base Stock | Fragrance coating |
|---|---|---|---|---|---|
| Grammage | g/m² | TAPPI T410 | 224 | 105 | 14 |
| Thickness | mils | TAPPI T411 | 9.1 | 4.3 | 0.5 |
| Smoothness Sheffield | SU | TAPPI | | | |
| FS | | T538 | 180 | 107 | |
| WS | | | 168 | 96 | |
| Porosity Gurley | sec./ 100cc | TAPPI T460 | N/A | 295 | |
| Sizing HST | sec | TAPPI T530 | N/A | 10 | |
| Burst strength | psi | TAPPI T403 | 58 | 29 | |
| Scott Bond | ft.lb/in² | TAPPI T569 | 135 | N/A | |
| Brightness D65 | % | TAPPI T525 | 99.9 | 99.2 | |
| Colour 65 (UV excl.) | | TAPPI | | | |
| L* | | T527 | 94.3 | 94.5 | |
| a* | | | -0.7 | -0.7 | |
| b* | | | 1.2 | 0.7 | |

**Table 4 - Leather fragrance**

| Properties | Units | Test Method | Fragrance Paper | Base Stock | Fragrance coating |
|---|---|---|---|---|---|
| Grammage | g/m² | TAPPI T410 | 218 | 105 | 8 |
| Thickness | mils | TAPPI T411 | 9.0 | 4.3 | 0.4 |
| Smoothness Sheffield | SU | TAPPI | | | |
| FS | | T538 | 220 | 107 | |
| WS | | | 190 | 96 | |
| Porosity Gurley | sec./ 100cc | TAPPI T460 | N/A | 295 | |
| Sizing HST | sec | TAPPI T530 | N/A | 10 | |
| Burst strength | psi | TAPPI T403 | 56 | 29 | |
| Scott Bond | ft.lb/in² | TAPPI T569 | 143 | N/A | |
| Brightness D65 | % | TAPPI T525 | 100 | 99.2 | |
| Colour 65 (UV excl.) | | TAPPI | | | |
| L* | | T527 | 94.4 | 94.5 | |
| a* | | | -0.7 | -0.7 | |
| b* | | | 1.3 | 0.7 | |

**Table 5 - Suntan fragrance**

| Properties | Units | Test Method | Fragrance Paper | Base Stock | Fragrance coating |
|---|---|---|---|---|---|
| Grammage | g/m² | TAPPI T410 | 224 | 105 | 14 |
| Thickness | mils | TAPPI T411 | 9.0 | 4.3 | 0.4 |
| Smoothness Sheffield | SU | TAPPI | | | |
| FS | | T538 | 190 | 107 | |
| WS | | | 187 | 96 | |
| Porosity Gurley | sec./ 100cc | TAPPI T460 | N/A | 295 | |
| Sizing HST | sec | TAPPI T530 | N/A | 10 | |
| Burst strength | psi | TAPPI T403 | 54 | 29 | |
| Scott Bond | ft.lb/in² | TAPPI T569 | 153 | N/A | |
| Brightness D65 | % | TAPPI T525 | 97.5 | 99.2 | |
| Colour 65 (UV excl.) | | TAPPI | | | |
| L* | | T527 | 94.2 | 94.5 | |
| a* | | | -0.7 | -0.7 | |
| b* | | | 1.4 | 0.7 | |

**Table 6 - Chocolate fragrance**

| Properties | Units | Test Method | Fragrance Paper | Base Stock | Fragrance coating |
|---|---|---|---|---|---|
| Grammage | g/m² | TAPPI T410 | 250 | 120 | 10 |
| Thickness | mils | TAPPI T411 | 11.6 | 5.9 | -0.2 |
| Smoothness Sheffield | SU | TAPPI | | | |
| FS | | T538 | 292 | 182 | |
| WS | | | 266 | | |
| Porosity Gurley | sec./ 100cc | TAPPI T460 | N/A | 10 | |
| Sizing HST | sec | TAPPI T530 | N/A | 22 | |
| Burst strength | psi | TAPPI T403 | 84 | 40 | |
| Scott Bond | ft.lb/in² | TAPPI T569 | 235 | N/A | |
| Brightness D65 | % | TAPPI T525 | 88 | N/A | |
| Colour 65 (UV excl.) | | TAPPI | | | |
| L* | | T527 | 92.1 | N/A | |
| a* | | | 0.0 | | |
| b* | | | 0.6 | | |

**Table 7 - Earth fragrance**

| Properties | Units | Test Method | Fragrance Paper | Base Stock | Fragrance coating |
|---|---|---|---|---|---|
| Grammage | g/m² | TAPPI T410 | 252 | 120 | 12 |
| Thickness | mils | TAPPI T411 | 11.8 | 5.9 | 0.0 |
| Smoothness Sheffield | SU | TAPPI | | | |
| FS | | T538 | 238 | 182 | |
| WS | | | 235 | | |
| Porosity Gurley | sec./ 100cc | TAPPI T460 | N/A | 10 | |
| Sizing HST | sec | TAPPI T530 | N/A | 22 | |
| Burst strength | psi | TAPPI T403 | 83 | 40 | |
| Scott Bond | ft.lb/in² | TAPPI T569 | 252 | N/A | |
| Brightness D65 | % | TAPPI T525 | 89.9 | N/A | |
| Colour 65 (UV excl.) | | TAPPI | | | |
| L* | | T527 | 92.1 | N/A | |
| a* | | | -0.1 | | |
| b* | | | 0.6 | | |

One of skill in the art will appreciate that the scented paper laminate has many applications. For example, it can be used as inserts, reply cards, give aways, posters, sport cards, and the like. Scented paper laminates can have adhesive or magnetic backings, allowing them to stick to other things either temporarily or permanently.

In an embodiment, the scented paper laminate is mainly designed to be directed to the print industry.

The scented paper laminates can emit a desired scent over an extended period of time, i.e. the desired scent that can still be detected by a consumer after a period of time in the environment of end use. By way of example, a product with a one-month lasting scent would have a desired scent after at least one month under the normal conditions of end use.

The scented paper laminates can be packaged in order to preserve scented qualities before being opened for end use. For example, the scented paper laminates can be put in a package that prevents the scent from migrating out of the product. Exemplary packages include polymeric packages, such as a polyethylene bag. Many different packaging configurations can be used.

The scented water-based adhesive composition can be applied either mechanically or manually.

The embodiments of the invention described above are intended to be exemplary only. The scope of the invention is therefore intended to be limited solely by the scope of the appended claims.

## Claims

1. A method for manufacturing a scented paper laminate having a moisture level below 10 wt%, the method comprising the steps of:
applying a scented water-based adhesive composition to a first face of a first paper substrate;
laminating a second paper substrate to the first face of the first paper substrate; and
controlling the moisture level of the scented paper laminate.

2. A method as claimed in claim 1, wherein said controlling comprises:
obtaining information concerning the moisture level of the scented paper laminate; and
if the moisture level of the scented paper laminate is above 10 wt%, drying the scented paper laminate to reduce the moisture level below 10 wt%.

3. A method as claimed in claim 2, wherein said drying comprises applying heat to the scented paper laminate.

4. A method as claimed in claim 1, wherein said applying comprises:
controlling the amount of scented water-based adhesive composition applied to obtain a coat having a grammage ranging between 4 and 80 grams per square meter, when wet.

5. A method as claimed in claim 1, wherein said applying is carried out at room temperature.

6. A method as claimed in claim 1, comprising controlling the viscosity of the water-based adhesive composition between 500 and 2000 centipoises.

7. A process for manufacturing a printable scented paper laminate, the process comprising:
applying a water-based scented adhesive at room temperature to a scented-free paper substrate having a grammage ranging between 50 and 850 grams per square meter, the scented water-based adhesive having including a vinyl ester resin;
laminating a second scent-free paper substrate to the paper substrate and adhesive assembly for bonding both paper substrates together; and
heating the substrate and adhesive assembly to reduce the moisture content below 10 wt%, the printable scented paper laminate having good performance on printing equipment.

8. A process as claimed in claim 7, wherein said applying comprises:
controlling the amount of scented water-based adhesive applied to obtain a coat having a grammage ranging between 4 and 80 grams per square meter, when wet.
